# EUROPEAN PATENT APPLICATION

(11) **EP 4 596 218 A1**
(43) Date of publication of application: **06.08.2025**
(21) Application number: 25154062.1
(22) Date of filing: 27.01.2025
(51) Int. Cl.: B29C 64/124, B29C 64/232, B29C 64/245, B29C 64/255, B29C 64/393, B33Y 10/00, B33Y 30/00, B33Y 50/02

(54) **PRECISION THREE-DIMENSIONAL MANUFACTURING SYSTEM**

(30) Priority: 26.01.2024 US 202463625402 P
(71) Applicant: 3D Systems, Incorporated, Rock Hill, SC 29730 (US)
(72) Inventor: Rohrbach, Samuel David, San Diego, 92131 (US); Clinton, Nickolas M., Carlsbad, 92009 (US); Sabo, David, San Diego, 92101 (US); Shilimkan, Shaunak R., Valley Center, 92082 (US)
(74) Representative: dompatent von Kreisler Selting Werner - Partnerschaft von Patent- und Rechtsanwälten mbB

(57) **Abstract**

A three-dimensional (3D) manufacturing system (2) is configured to fabricate a 3D article (4). The 3D manufacturing system includes a base (8), a resin vessel (10) supported by the base, a tension ring (32), a vertical movement mechanism (16), an elevator (18) coupled to the VMM, a build platform (20), a load sensor (26), and a controller (25). The resin vessel includes a transparent sheet (28) that is tensioned by the tension ring. An upper surface of the transparent sheet above the tension ring defines a datum surface (34). The build platform contains a mechanism and has a build surface. When the build surface is pressed against the datum surface, the mechanism allows the build surface to rotate about a horizontal axis so as to be flush with the datum surface. When the build surface is raised above the datum surface, the mechanism locks in a parallel orientation of the build surface with respect to the datum surface.

## Description

### Cross-Reference to Related Applications

This non-provisional patent application claims priority to U.S. Provisional Application Serial Number 63/625,402, Entitled "Precision Three-Dimensional Manufacturing System" by Samuel David Rohrbach et al., filed on January 26, 2024, incorporated herein by reference under the benefit of U.S.C. 119(e).

### Field of the Invention

The present disclosure concerns an apparatus and method for fabrication of solid three dimensional (3D) articles of manufacture from radiation curable materials. More particularly, the present disclosure concerns an apparatus for producing customized and extremely precision 3D articles.

### Background

Three dimensional (3D) printers are in rapidly increasing use for manufacturing customized articles. One class of 3D printers includes stereolithography printers having a general principle of operation including the selective curing and hardening of radiation curable (i.e., photocurable) liquid resins. One type of stereolithography system includes a containment vessel holding the curable resin, a movement mechanism coupled to a support tray, and a light engine. The stereolithography system forms a three dimensional (3D) article of manufacture by selectively curing layers of the photocurable resin onto a lower build surface of the support tray along a build plane. There is a desire to produce 3D articles having feature size tolerances that are less than 10 microns, less than five microns, less than 2 microns, or less than one micron in size. One challenge is to very accurately align the lower surface of the build surface to the build plane.

### Summary

In a first aspect of the disclosure, a three-dimensional (3D) manufacturing system is configured to fabricate a 3D article. The 3D manufacturing system includes a base, a resin vessel supported by the base, a tension ring, a vertical movement mechanism (VMM), an elevator coupled to the VMM, a build platform, a load sensor, and a controller. The resin vessel includes a transparent sheet that is tensioned by the tension ring. An upper surface of the transparent sheet above the tension ring defines a datum surface. The build platform contains a mechanism and has a build surface. When the build surface is pressed against the datum surface, the mechanism allows the build surface to non-frictionally rotate about a horizontal axis so as to be flush with the datum surface. When the build surface is raised above the datum surface, the mechanism frictionally locks in a parallel orientation of the build surface with respect to the datum surface.

In a second aspect of the disclosure, a three-dimensional (3D) manufacturing system is configured to fabricate a 3D article. The 3D manufacturing system includes a base, a resin vessel supported by the base, a tension ring, a vertical movement mechanism (VMM), an elevator coupled to the VMM, a build platform, a load sensor, and a controller.

The resin vessel is configured to contain a volume of photocurable resin. The resin vessel includes a transparent sheet that forms a lower containment boundary for the photocurable resin. The transparent sheet overlays the tension ring which tensions the transparent sheet under the build plane. An upper surface of the transparent sheet directly above the tension ring defines a datum surface.

The build platform includes a rod having a lower end, a base assembly, and a spring. The base assembly has a build surface facing the build plane and datum surface and is configured to support the 3D article during fabrication. The base assembly has an inner surface defining an internal recess (or in alternative language an internal cavity that is defined and at least partially contained by portions of the base assembly). The recess has a lower section that is wider than the lower end of the rod and a tapered section that tapers upward to capture the lower end of the rod in the recess. The spring is disposed within the lower section of the recess and is configured to exert a vertical force between the lower end of the rod and the base assembly. The tapered section, by restraining the lower end of the rod, limits a vertical expansion of the spring.

The controller is configured to (1) operate the VMM to lower the elevator while monitoring the signal from the load sensor, (2) determine an initial contact between the build surface and the datum surface based upon the signal from the load sensor, and (3) operate the VMM to continue lowering the elevator a predetermined vertical distance during which the spring is compressed, the lower end of the rod disengages from the tapered section, and the base assembly pivots until the build surface is parallel to and engaged with the datum surface.

In one implementation - during step (2) the speed (S2) of lowering the elevator is reduced relative to a speed (S1) of lowering the elevator during step (1). Stated another way, after determination of an initial contact between the build surface in the datum surface (based on the signal from the load sensor), a downward speed of the elevator is reduced from a relatively higher speed (S1) to a relatively lower speed (S2).

In another implementation, the controller is further configured to: (4) operate the VMM to raise the elevator during which the spring partially decompresses and the lower end of the rod re-engages with the tapered section to frictionally lock the build surface to be parallel to the datum surface as build surface is raised above the datum surface, (5) operate the VMM to lower the elevator while continuing to monitor the signal from the sensor, (6) upon detection of contact between the build surface and the datum, (7) operate the VMM to raise the build surface, (8) position the build surface (or later a lower face of the 3D article) at the build plane, (9) operate the light engine to selectively harden the photocurable resin over the build plane, and repeat steps (7) - (9) to complete fabrication of the 3D article in a layer-by-layer manner.

In yet another implementation, the rod includes an intermediate section or portion that is coupled to the lower end, the lower end defines a partial sphere or spheroid shape having a lateral diameter that is greater than that of the intermediate section of the rod so as to be captured by the tapered section of the recess to limit expansion of the spring. Stated alternatively, the intermediate section of the rod has an intermediate lateral dimension, the lower end of the rod has a lower lateral dimension, the lower lateral dimension is greater than the intermediate lateral dimension. In an embodiment of circular cross section, the intermediate lateral dimension is an intermediate lateral diameter and the lower lateral dimension is a lower lateral diameter, and the lower lateral diameter is greater than the intermediate lateral diameter. Other cross sectional shapes are possible for portions of the rod, such as elliptical, square, polygonal, triangular, or irregular without departing from the function of the independent claim.

In a further implementation, the build platform includes a washer between the spring and the lower end of the rod. The washer effectively transfers the force of the spring to the lower end of the rod and more effectively engages with the spring.

In a yet further implementation, the base assembly includes a base that defines the build surface, an insert that defines the recess, a lower portion of the insert is sealingly coupled to the base, and a sleeve that is sealingly coupled to an upper portion of the insert. Coupling between the base and the insert and between the insert and the sleeve can be a threaded coupling. The insert can fluidically seal to the base via an O-ring. A face seal can seal the sleeve to the insert and/or the sleeve to the base.

### Brief Description of the Figures

FIG. 1 is an isometric drawing depicting an embodiment of a three-dimensional (3D) manufacturing system for fabricating a 3D article.
FIG. 2 is a sectional drawing to illustrate embodiments of components of a system including an resin vessel, an elevator, and a build platform.
FIG. 3 is a sectional drawing to provide details of an embodiment of a build platform supporting a 3D article.
FIG. 4 is an isometric drawing of an embodiment of a resin vessel and build platform.
FIG. 5A is a sectional drawing of an embodiment of a lower portion of a build platform positioned within a resin vessel with a build surface above a datum surface.
FIG. 5B is a sectional drawing of an embodiment of a lower portion of a build platform positioned within a resin vessel with a build surface engaged with and parallel to a datum surface.
FIG. 6 is a simplified electrical block diagram of an embodiment of a three-dimensional (3D) manufacturing system for fabricating a 3D article.
FIG. 7 is a simplified flowchart of a method of manufacturing a 3D article.
FIG. 8 is a flowchart of an embodiment of a method for calibrating and orienting a build surface.

### Detailed Description of the Preferred Embodiments

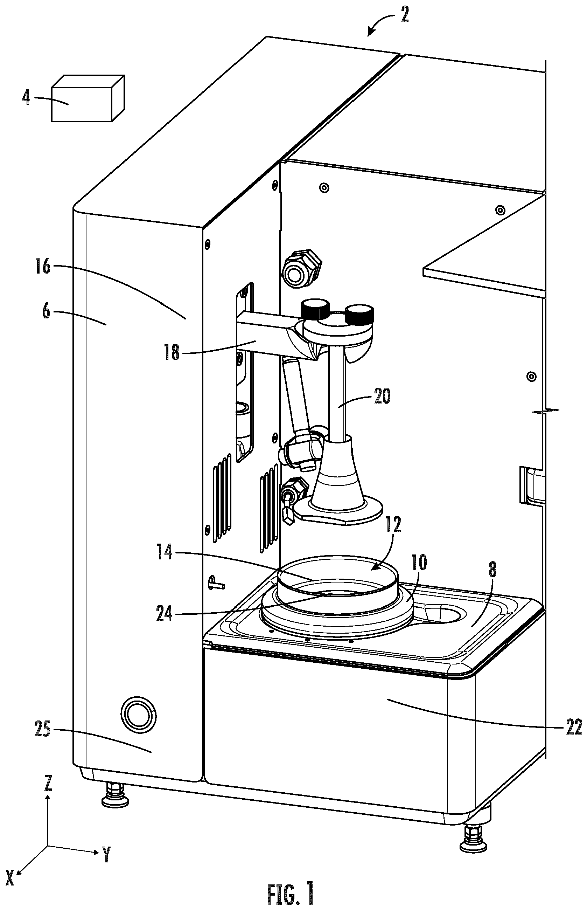

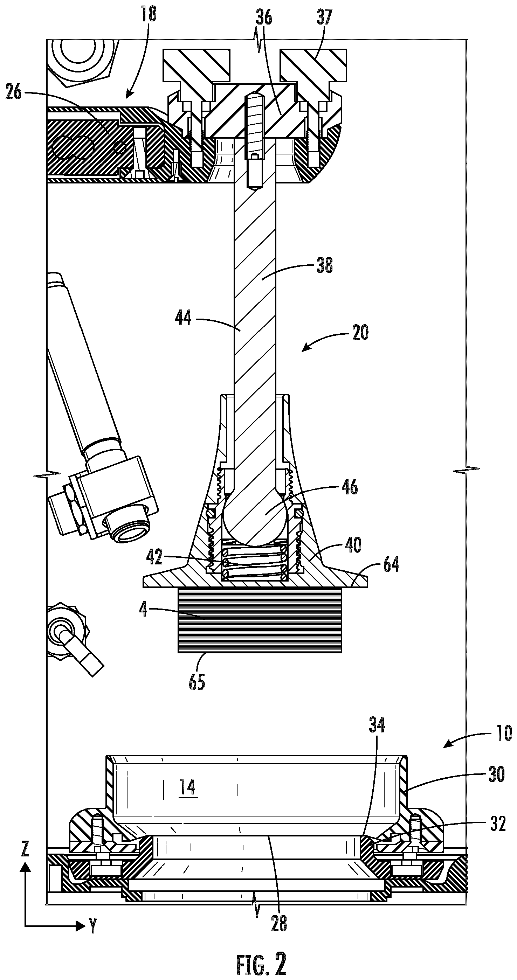

FIG. 1 is an isometric drawing depicting an embodiment of a three-dimensional (3D) manufacturing system 2 for fabricating a 3D article 4. 3D article 4 is generally a polymeric article of manufacture that can have consumer, industrial, or biologic uses. In describing 3D system 2, mutually perpendicular axes X, Y, and Z will be used. Axes X and Y are generally horizontal lateral axes. Axis Z is a vertical axis that is generally aligned with a gravitational reference. In using the word "generally" it is implied that a limitation that is "generally" true is by design but to within manufacturing tolerances. Additionally angular axes theta-X, theta-Y, and theta-Z are rotations about the X, Y, and Z axes respectively. Depicted in FIG. 2 is a portion of the 3D manufacturing system 2 (or referred to as system 2 for purposes of brevity) for purposes of illustration and description.

System 2 is partially encased in an outer housing 6 and includes a rigid base 8. Base 8 is rigid in the sense that it is formed of high stability and modulus materials such as granite, steel, titanium, and other metals. Supported by base 8 is a resin vessel 10. Resin vessel 10 defines a liquid containment structure 12 configured to support and contain a photocurable resin 14.

Photocurable resin 14 is a liquid polymeric material configured to be selectively hardened with a selective application of radiation. The photocurable resin generally contains a monomer and catalyst. The catalyst facilitates polymerization and/or crosslinking of the monomer in response to being irradiated. Photocurable resin 14 can also include other components such as colorants, fillers, and additional polymeric materials. Photocurable resins 14 are generally known in the field of 3D printing of plastics and biologic 3D articles.

System 2 includes a vertical movement mechanism (VMM) 16 that is mechanically coupled to an elevator 18. An embodiment of vertical movement mechanism 16 includes a motorized ball bearing screw mechanism or otherwise referred to as a ball screw mechanism. A ball screw mechanism includes a vertical screw shaft that passes through a ball nut. The ball nut contains recirculating steel balls and translates vertically. The vertical screw shaft has helical channels that engage the recirculating balls. The elevator 18 includes the ball nut. A motor is coupled to the vertical screw shaft and is configured to selectively rotate the vertical screw shaft. As the vertical screw shaft rotates, the action of the vertical screw shaft upon the ball nut translates the elevator upward and downward depending on a direction of rotation. Such translation mechanisms are known in the art for precision positioning along vertical, horizontal, and oblique axes. Other embodiments are possible such as a lead screw and nut system or a rack and pinion mechanism or a motorized belt/pulley system and are all known in the art for linearly translating components along various axes.

Attached to the elevator is a build platform 20. Build platform 20 is for supporting the 3D article 4 as it is being formed. Further details of the build platform 20 will be described infra.

Below the resin vessel 10 is a light engine 22 (within housing 6). The light engine 22 is configured to selectively irradiate a build plane 24 within the resin vessel 10. The build plane 24 is a planar area that is just above a datum surface 34 (FIG. 2) or within 1 millimeter of the datum surface 34. A lateral extent of the build plane is an area over which the light engine 22 is capable of selectively hardening a layer of the photocurable resin 14.

In the illustrated embodiment, the light engine 22 includes one or more projection-based light engines. Projection-based light engines are known in the art for stereolithography systems. Such a light engine includes a light source, a spatial light modulator, projection optics, and other optical components (bending lenses or mirrors, converging and diverging lenses or mirrors, to name a few). The spatial light modulator can include an array of actuatable mirrors (otherwise known as micromirrors or a "DMD" array) as is known in the art. Other light engines are possible such as lasers that are steered with galvanometer mirrors and light-emitting diode (LED) array heads which are also known in the art for stereolithography.

System 2 includes a controller 25 that is controllably coupled to the VMM 16, the light engine 22, and various motion devices and sensors. The controller 25 includes a processor coupled to an information storage device. The information storage device includes a non-volatile or a non-transient storage device such as a hard drive or flash memory. The non-volatile or a non-transient storage device stores software instructions that when executed by the processor allow the controller 25 to operate portions, elements, and components of the system 2. The controller 25 can be a single microcontroller located within the housing 6 or it can include multiple controllers within and/or external to the housing 6. The controller can include one or more of a microcontroller, a mobile computer, a personal computer, a desktop computer, a server, a laptop, a smartphone, and other computing devices that are known in the art for controlling systems and system components.

FIG. 2 is a cutaway drawing to further illustrate components of system 2 including resin vessel 10, elevator 18, and build platform 20. The elevator 18 incorporates a load sensor 26 that is configured to output a signal indicative of a vertical force exerted on the build platform 20. Load sensors such as load sensor 26 are also referred to a load cells or force transducers which are known in the art. In one embodiment, load sensor 26 includes a piezoelectric crystal that outputs a voltage that correlates with a force exerted on the piezoelectric crystal. The load sensor 26 can also include amplifying electronics for amplifying the voltage from the piezoelectric crystal and analog to digital electronics for converting an analog signal to digital information all of which are known in the art of force or load sensors.

The resin vessel 10 is configured to contain the photocurable resin 14 and includes a transparent sheet 28 and outer wall 30. The transparent sheet 28 is stretched over a tension ring 32 which thereby tensions and planarizes the transparent sheet 28. An upper surface 34 of the transparent sheet 28 defines a datum 34 or datum surface 34 that laterally surrounds the build plane 24 and an unsupported or laterally inner region of the transparent sheet 28.

In an illustrative embodiment, the transparent sheet 28 is "semipermeable" in that it is transmissive of an inhibitor such as oxygen. The transparent sheet is "transparent" in the sense that it is transparent to radiation in blue to ultraviolet wavelengths or about 500 nm (nanometers) to 100 nm. One example of a suitable transparent sheet is a fluoropolymer with optical clarity and gas permeability such as Teflon^{™} AF 2400. Other polymeric sheet materials can be suitable for the particular application.

The build platform 20 includes, inter alia, a collar 36, knobs 37, a rod 38, a base assembly 40, and a spring 42. The knobs 37 pass through the collar 36 and thread into the elevator 18 to affix the build platform 20 to the elevator 18. The rod 38 includes an intermediate or main body section 44 that is affixed to the collar 36 and extends downward to a lower end 46.

The lower end 46 of the rod has a larger lateral dimension or diameter than the main body section 44. The lower end 46 generally has a spheroid or spherical surface geometry or shape. The spring 42 is compressed along a vertical axis Z and vertically urges the rod 38 and the base assembly 40 apart along Z. The base assembly 40 defines a cavity that captures the lower end 46 of rod 38 which thereby limits a vertical expansion of the spring 42.

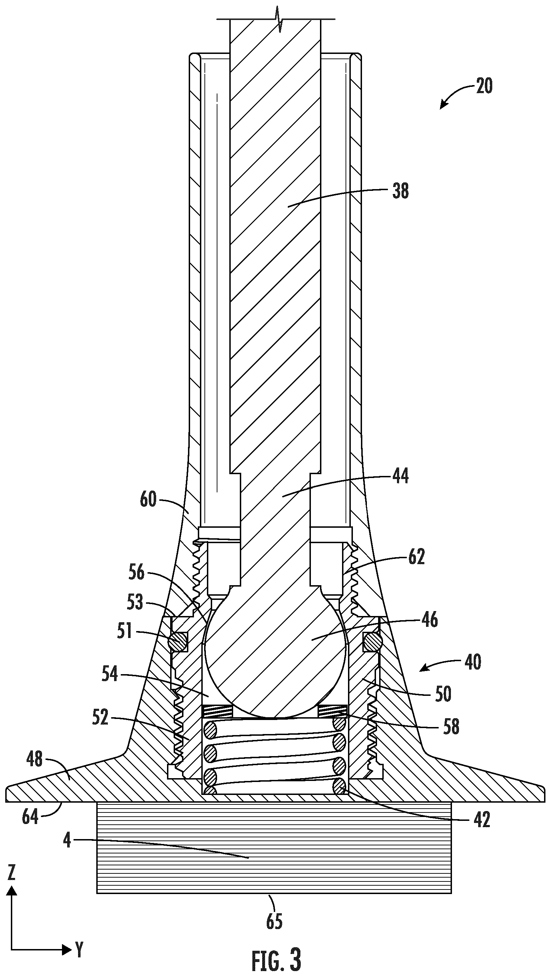

FIG. 3 is a sectional view that provides more details of a lower portion of the build platform 20. The base assembly 40 includes a base 48 and an insert 50. The insert 50 has a lower portion 52 that is sealingly coupled to the base 48 by an O-ring 51. The insert 50 defines an internal recess 54 (or, in alternative language, an internal cavity 54) which contains the lower end 46 of the rod 38. A conical inner surface 56 of the insert 50 defines a portion of the recess 54 that tapers upward. The lower portion of internal recess 54 allows vertical translation and rotation of the lower end 46 of the rod 38 relative to the base 48. However, the conical inner surface 56 of the insert limits upward motion of the lower end 46 of the rod 38 relative to the base 48. Stated another way, the tapered section of recess 54 vertically captures and restrains upward motion of the (spherical or spheroidal) lower end 46 of the rod 38 relative to base 48.

In FIG. 3, the spring 42 exerts a vertical compressive force between the lower end 46 and the base 48. The lower end 46 in turn presses upon the conical inner surface 56. In the illustrated embodiment, a washer 58 is between the lower end 46 and the spring 42. The washer 58 transfers the force from spring 42 to the lower end 46.

A sleeve 60 is sealingly coupled to an upper portion 62 of the insert 50. The sleeve 60 along with fluid seals (O-ring 51 and face seal 53 between sleeve 60 and insert 50) prevent photocurable resin 14 from reaching the internal recess 54 which would otherwise interfere with linear and pivotal motion of the base assembly 40 with respect to the lower end 46 of rod 38. Base 48 of base assembly 40 has a lower surface 64 upon which the 3D article 4 is fabricated in a layer-by-layer manner.

In an illustrative embodiment for build platform 20, materials are used for their strength, modulus, and inert properties. The rod 38, base 48, and sleeve 60 can be formed from titanium. The knobs 37 and spring 42 can be formed from stainless steel. The collar 36 can be formed from aluminum. The insert 50 can be formed from a polymer such as Polyoxymethylene (POM), a high-performance acetal resin. The washer 58 can be formed from polyamide. Other materials are possible.

Also shown in FIGS. 2 and 3 is the 3D article 4 that has been partially formed onto the lower surface 64 of the base 48 in a layer-by-layer manner. The 3D article 64 also has a lower face 65 which is a lower surface 65 of the most recently formed layer.

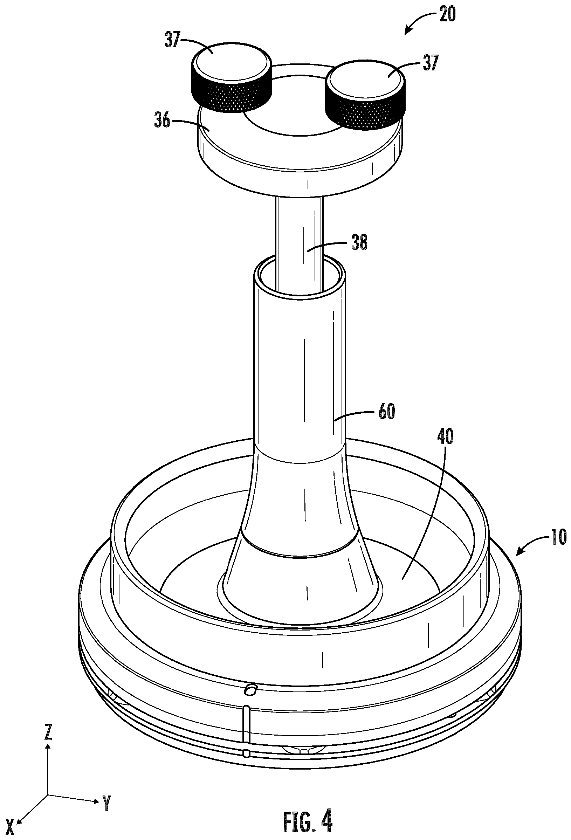

FIG. 4 is an isometric drawing of the resin vessel 10 and build platform 20. In FIG. 4, the base assembly 40 is lowered into the resin vessel 10. FIGS. 1 and 2 can be referred to as a "raised state A" for the elevator 18 and build platform 20. FIG. 4 can be referred to as a "lowered state B" for the elevator 18 and build platform 20. As illustrated, the sleeve 60 extends far enough from the lower surface 64 to fully protect the rod 38 from photocurable resin 14 contained within the resin vessel 10.

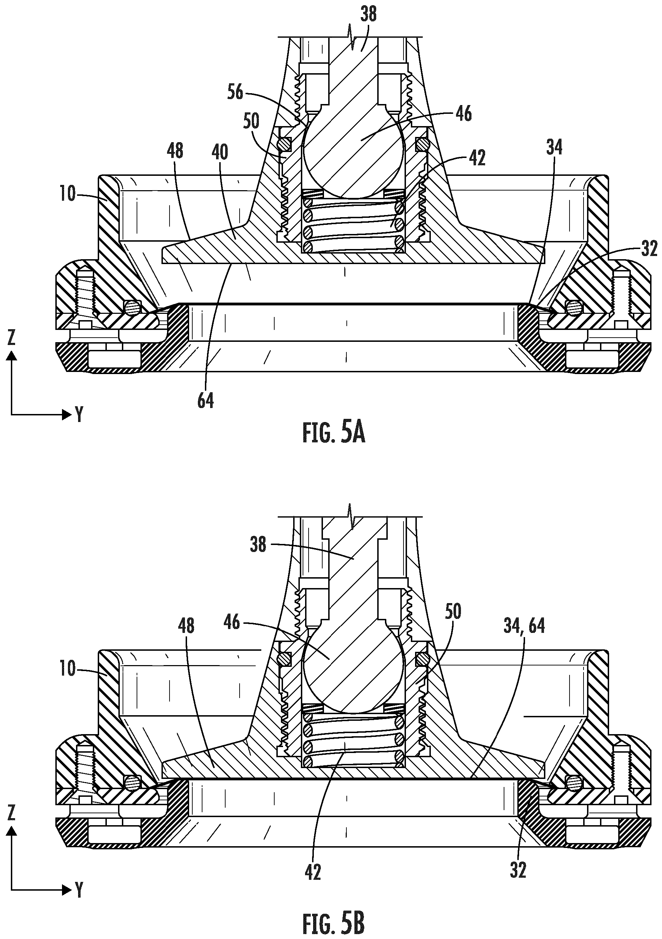

FIGS. 5A and 5B illustrate the resin vessel 10 and a lower end of build platform 20 with the lower surface 64 above (5A) and flush with (5B) the datum surface 34. As the build platform 20 is lowered and raised, there is a sequence of "mechanical events" that result:

(1, Downward Motion) In the raised states (A) - during which the lower surface 64 has not made contact with the datum surface 34, the vertically compressed spring 42 is pressing the base assembly 40 downward from the lower end 46 of rod 38. The lower end 46 presses upward upon the conical inner surface 56 of insert 50. This has the effect of limiting the expansion of the spring 42. Also, the impingement of the lower end 46 upon conical surface 56 frictionally resists rotation of the base assembly 40 with respect to a horizontal axis (X, Y, or combination of X and Y).

(2, Downward Motion): The lower surface 64 initially contacts the datum surface 34 at one point or location because the lower surface 64 is not yet parallel to the datum surface 34. The force of this initial contact is enough to generate a change in signal from the load sensor 26. Due to friction between the lower end 46 and conical surface 56, orientation of the lower surface 64 is initially maintained in a non-parallel orientation relative to the datum 34.

(3, Downward Motion): As the rod 38 is lowered further, the lower end 46 compresses the spring 42 and disengages from the conical surface 56. Then, the frictional force between the lower end 46 and the conical surface 56 is diminished so that the base assembly 40 can freely rotate about the lateral axes X and Y with respect to the lower end 46.

(4, Downward Motion): As the rod is lowered further, the base assembly 40 rotates about X and Y until being parallel with the datum surface 34. When the rotation ends, the lower surface 64 is parallel to and pressed (flush) against the datum surface 34 and then downward motion of the rod 38 only serves to further compress the spring 42. With some added spring compression, downward motion halts. FIG. 5B depicts the moment between downward and upward motion.

(5, Upward Motion): As the rod 38 rises, the spring 42 expands but maintains a force of the lower surface 64 against the datum surface 34. This occurs until the lower end 46 re-engages the conical surface 56. Once the lower end 46 engages the conical surface 56, the base assembly 48 orientation is frictionally locked into being parallel with the datum surface 34. This is because friction between the conical surface 56 and the lower end 46 prevents rotation about X and/or Y.

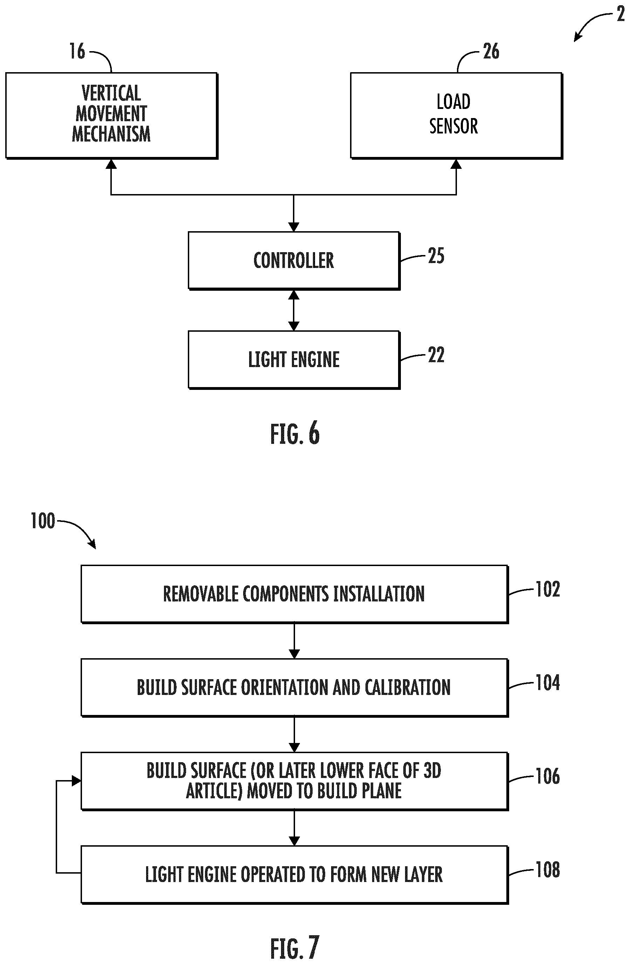

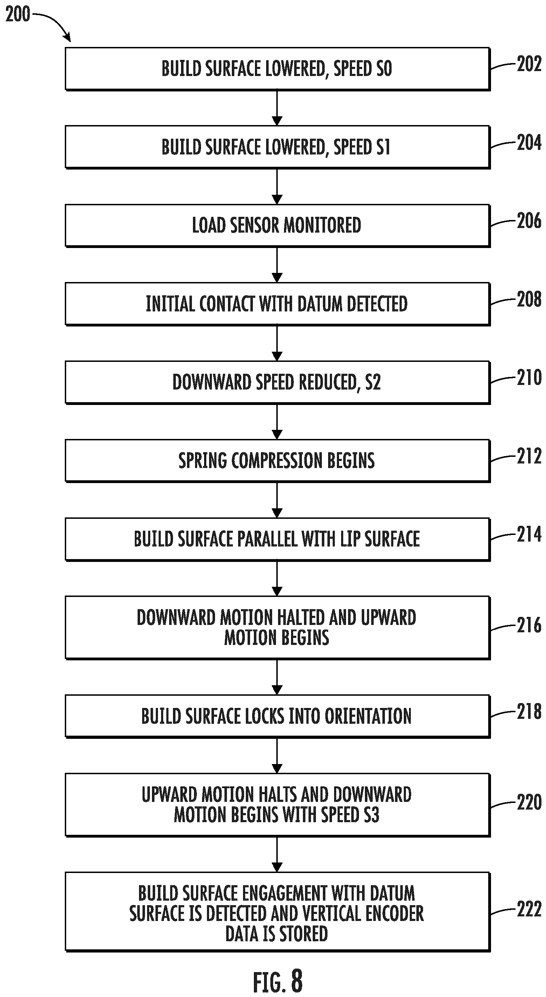

(6, Upward Motion): As the rod rises further, engagement of the lower end 46 of the rod 38 with the cone 56 lifts the lower surface 64 of the base assembly 40 away from the datum surface, as depicted in FIG. 5A. Further details of the motion will be described with respect to FIGS. 7 and 8.

FIG. 6 is a simplified electrical block diagram of system 2. The elements of FIG. 6 were discussed with respect to FIG. 1. The controller 25 is controllably coupled to the vertical movement mechanism (VMM) 16, the load sensor 26, the light engine 22, and other components that are left out of FIG. 6 for simplicity. Part of the VMM 16 is an encoder that outputs information or data indicative of the height of the elevator 18. Such an encoder can be optical - in which small dark "tick marks" along an optically transparent or reflective strip or disk of material are optically detected to determine distance. Encoders for tracking positions of vertical movement mechanisms are well known in various fields of art including two and three dimensional printers.

FIG. 7 is a flowchart depicting a method 100 of operating the manufacturing system 2 for fabricating or manufacturing the 3D article 4. According to 102, various removable components including the resin vessel 10 and the build platform 20 are installed into the system 2. The photocurable resin 14 can be dispensed into the resin vessel 10 either before or after installing the resin vessel 10 upon the base 8. The build platform 20 is secured to the elevator 18 with the two knobs 37. The exact order of these steps can vary.

According to 104, the system 2 is operated to orient and calibrate build surface 64. Orientation has been described supra with respect to FIGS. 5A/B and the "sequence of mechanical events" and will be further described infra for FIG. 8. Calibration will also be described with respect to FIG. 8.

According to 106, the build surface 64 or lower face 65 is positioned at the build plane 24. A lateral (X and Y) extent of build plane 24 is defined by an extent of selective irradiation of a thin slab of the photocurable resin 14 by the light engine 22. The lateral extent of the build plane is within an inside edge of the datum surface 34. Generally the build plane is vertically located within a distance within 1 millimeter (mm) of the datum surface 34.

According to 108, the light engine 22 is operated to selectively irradiate the build plane 24 to selectively cure a layer of the photocurable resin 14 onto the lower surface or face 65 (FIG. 3) of the 3D article 4. Steps 106 are 108 are repeated to fully fabricate the 3D article 4.

FIG. 8 is a flowchart depicting a method 200 for orienting and calibrating the build surface 64. Method 200 is a detailed embodiment of step 104 of method 100 (FIG. 7). Method 200 begins with the elevator in a relatively raised state - with the base assembly 40 above the resin vessel 10 as depicted in FIG. 1. All operations in FIG. 8 are performed by the controller 25 operating on the VMM 16 and monitoring the load sensor 26.

According to 202, the VMM 16 lowers the elevator 18 with a relatively high speed S0 until the lower surface 64 begins to enter the resin vessel 10 as depicted in FIG. 5A. Then according to 204, the VMM 16 lowers the elevator with a slower speed S1. According to 206 the load sensor 26 is monitored.

Initial contact is made between the lower surface 64 and datum surface 34. According to 208, the signal from the load sensor 26 indicates the initial contact. In an illustrative embodiment, step 208 includes identification of an immediate change in a voltage versus time signal within the load sensor 26. Also, according to 208, an initial VMM 16 encoder value is recorded, which is indicative of a vertical height of elevator 18. According to 210, the VMM slows the downward speed to S2 - in one embodiment a speed of one millimeter per second. According to 212 the spring 42 is compressed and the lower surface 64 begins to rotate toward being parallel with datum surface 34. During this rotation, the lower end 46 of the rod 38 is no longer in contact with the conical surface 56. Before step 216, the elevator is moved down by 4 about millimeters (mm) and then downward motion is halted.

According to 214, the build surface 64 is parallel to and pressed against the datum surface 34. According to 216, the VMM 16 halts downward motion and begins upward motion. The force of the spring 42 keeps the build surface 64 pressed against the datum surface 34 until the lower end 46 of the rod 38 engages the conical surface 56. Engagement of the lower end 46 with the conical surface 56 locks the orientation of the build surface 64 parallel to the datum surface 34 according to 218.

According to 220, the VMM 16 raises the build surface 64 above the datum surface 34 and then halts motion. Also according to 220, the VMM 16 begins downward motion again with a very slow speed S3 (slower than S2, in one embodiment 50 microns per second). According to 222, the load sensor 26 outputs a signal indicating that the build surface 64 has again contacted the datum surface 34. When this signal is detected, a vertical encoder value from the VMM 16 is stored. This provides a very accurate height of the datum surface 34 and therefore for the build plane 24 (which is typically less than 1 mm above the datum 34 and more typically less than 0.1 mm above the datum 34). Having this accurate height allows for accurate positioning during step 106 of method 100 (FIG. 7).

The specific embodiments and applications thereof described above are for illustrative purposes only and do not preclude modifications and variations encompassed by the scope of the following claims.

## Claims

1. A three-dimensional (3D) manufacturing system configured to fabricate a 3D article comprising:
a base;
a datum surface supported by the base;
a vertical movement mechanism (VMM);
an elevator coupled to the VMM;
a build platform coupled to the elevator, the build platform including:
a rod having a lower end;
a base assembly defining:
a build surface facing the datum surface and configured to support the 3D article;
an internal recess having a lower section that is wider than the lower end of the rod and a tapered section that tapers upward to capture the lower end of the rod within the internal recess;
a spring within the internal recess and configured to exert a vertical force between the lower end of the rod and the base assembly, the tapered section limiting vertical expansion of the spring;
a controller configured to:
(1) operate the VMM to lower the elevator while the spring urges the lower end of the rod against the tapered section until base assembly initially engages the datum surface;
(2) operate the VMM to further lower the elevator and to compress the spring as the lower end of the rod disengages from the tapered section and the base assembly begins to pivot about the lower end of the rod until the build surface is parallel to and engaged with the datum surface.

2. The 3D manufacturing system of claim 1 further comprising:
a resin vessel including a transparent sheet that forms a lower containment boundary of photocurable resin within the resin vessel;
a tension ring, an upper surface of the transparent sheet overlaying the tension ring defines the datum surface; and
a light engine configured selectively irradiate the photocurable resin over a build plane that is adjacent to and above the transparent sheet.

3. The 3D manufacturing system of claim 1 wherein the rod includes an intermediate section that is coupled to the lower end, the lower end defines a partial sphere or spheroid shape having a lateral diameter that is greater than that of the intermediate section of the rod so as to be captured by the tapered section of the internal recess to limit expansion of the spring.

4. The 3D manufacturing system of claim 1 further comprising a washer between the spring and the lower end of the rod.

5. The 3D manufacturing system of claim 1 wherein the base assembly includes:
a base that defines the build surface;
an insert that defines the internal recess, a lower portion of the insert is sealingly coupled to the base; and
a sleeve that is sealingly coupled to an upper portion of the insert.

6. The 3D manufacturing system of claim 1 further comprising a load sensor configured to output a signal indicative of a vertical force upon the build surface.

7. The 3D manufacturing system of claim 1 wherein the controller is further configured to (3) operate the VMM to raise the elevator at least until the lower end of the rod impinges upon the tapered section of the internal recess which locks an orientation of the build surface parallel to the datum surface.

8. The 3D manufacturing system of claim 7 wherein the controller is further configured to (4) operate the VMM to position the lower surface upon the datum surface, and (5) store a vertical encoder value indicative of a height of the datum surface.

9. A method of manufacturing a 3D article comprising:
providing a 3D manufacturing system including:
a base;
a datum surface supported by the base;
a vertical movement mechanism (VMM);
an elevator coupled to the VMM;
a build platform coupled to the elevator, the build platform including:
a rod having a lower end;
a base assembly having:
a build surface facing the datum surface and configured to support the 3D article;
an inner surface defining an internal recess, the internal recess having a lower section that is wider than the lower end of the rod and a tapered section that tapers upward to capture the lower section of the rod within the internal recess;
a spring within the internal recess and configured to exert a vertical force between the lower section of the rod and the base assembly, the tapered section limiting vertical expansion of the spring;
operating the VMM to lower the elevator while the spring urges the lower end of the rod against the tapered section until base assembly initially engages the datum surface;
operating the VMM to further lower the elevator and to compress the spring as the lower end of the rod disengages from the tapered section and the base assembly begins to pivot about the lower end of the rod until the build surface is parallel to the datum surface.

10. The method of claim 9 wherein the 3D manufacturing system further includes:
a resin vessel including a transparent sheet that forms a lower containment boundary of photocurable resin within the resin vessel;
a tension ring, an upper surface of the transparent sheet overlaying the tension ring defines the datum surface; and
a light engine configured selectively irradiate the photocurable resin over a build plane that is adjacent to and above the transparent sheet;
the method further includes operating the VMM and the light engine to fabricate the 3D article.

11. The method of claim 9 further comprising (3) operating the VMM to raise the elevator at least until the lower end of the rod impinges upon the tapered section of the recess which locks an orientation of the build surface so as to be parallel to the datum surface.

12. The method of claim 11 further comprising (4) operating the VMM to position the lower surface upon the datum surface, and (5) storing a vertical encoder value indicative of a height of the datum surface.

13. A three-dimensional (3D) manufacturing system configured to fabricate a 3D article comprising:
a base;
a resin vessel supported by the base, the resin vessel including a transparent sheet that forms a lower containment boundary of photocurable resin within the resin vessel, a tension ring, an upper surface of the transparent sheet overlaying the tension ring and defines a datum surface;
a vertical movement mechanism (VMM);
an elevator coupled to the VMM;
a build platform coupled to the elevator, the build platform including:
a rod having a lower end;
a base assembly defining:
a build surface facing the datum surface and configured to support the 3D article;
an internal recess having a lower section that is wider than the lower end of the rod and a tapered section that tapers upward to capture the lower section of the rod within the internal recess;
a spring within the internal recess and configured to exert a vertical force between the lower end of the rod and the base assembly, the tapered section limiting vertical expansion of the spring;
a load sensor configured to output a signal indicative of an upward force upon the build platform;
a light engine configured to selectively image the photocurable resin over a build plane that is above the transparent sheet; and
a controller configured to:
(1) operate the VMM to lower the elevator while monitoring the signal from the load sensor;
(2) determine an initial contact between the build surface and the datum surface based upon the signal from the load sensor; and
(3) operate the VMM to continue lowering the elevator a predetermined vertical distance during which the spring is compressed, the lower end of the rod disengages from the tapered section, and the base assembly pivots until the build surface is parallel to and engaged with the datum surface.

14. The 3D manufacturing system of claim 13 wherein the during step (2) the speed (S2) of lowering the elevator is reduced relative to a speed (S1) of lowering the elevator during step (1).

15. The 3D manufacturing system of claim 13 wherein the controller is further configured to (4) operate the VMM to raise the elevator during which the spring partially decompresses and the lower end of the rod re-engages with the tapered section to frictionally lock the build surface to be parallel to the datum surface as build surface is raised above the datum surface.

16. The 3D manufacturing system of claim 15 wherein the controller is further configured to:
(5) operate the VMM to lower the elevator while continuing to monitor the signal from the sensor; and
(6) upon detection of contact between the build surface and the datum surface, record information indicative of a height of the datum surface.

17. The 3D manufacturing system of claim 16 wherein the controller is further configured to:
(7) operate the VMM to raise the build surface;
(8) position the build surface at the build plane;
(9) operate the light engine to selectively harden the photocurable resin over the build plane; and
(10) repeat steps (7) - (9) to complete fabrication of the 3D article in a layer-by-layer manner.

18. The 3D manufacturing system of claim 13 wherein the rod includes an intermediate section that is coupled to the lower end, the lower end defines a partial sphere or partial spheroid shape having a lateral diameter that is greater than that of the intermediate section of the rod so as to be captured by the tapered section of the internal recess to limit expansion of the spring.

19. The 3D manufacturing system of claim 13 further comprising a washer between the spring and the lower end of the rod.

20. The 3D manufacturing system of claim 13 wherein the base assembly includes:
a base that defines the build surface;
an insert that defines the internal recess, a lower portion of the insert is sealingly coupled to the base; and
a sleeve that is sealingly coupled to an upper portion of the insert.
